# EUROPÄISCHE PATENTSCHRIFT

(11) **EP 1 482 187 B1**
(45) Veröffentlichungstag und Bekanntmachung des Hinweises auf die Patenterteilung: **19.10.2005**
(21) Anmeldenummer: 03011801.2
(22) Anmeldetag: 26.05.2003
(51) Int. Cl.: F16B 7/04, E04C 5/16

(54) **Vorrichtung zum Verbinden von Stabenden**
Device for connecting bar ends
Dispositif pour relier des extrémités de barre

(43) Veröffentlichungstag der Anmeldung: 01.12.2004
(73) Patentinhaber: HALFEN GmbH & CO. Kommanditgesellschaft, 40764 Langenfeld-Richrath (DE)
(72) Erfinder: Fröhlich, Klaus, 75177 Pforzheim (DE)
(74) Vertreter: Riedel, Peter

(56) Entgegenhaltungen:
- EP-A- 0 348 060
- DE-U- 29 500 727

## Beschreibung

Die Erfindung betrifft eine Vorrichtung zum Verbinden von Stabenden, insbesondere von Bewehrungsstäben im Betonbau der im Oberbegriff des Anspruchs 1 angegebenen Gattung (DE 295 00 727 U).

In der EP 0 348 060 B1 ist eine Anschlußvorrichtung zum Herstellen von Verbindungen von Verstärkungsstäben für den Betonbau beschrieben. Diese Anschlußvorrichtung besteht aus einer Hülse, in die die Stabenden gesteckt werden. Die Hülse weist mehrere radiale Gewindebohrungen auf, in die Schrauben gedreht werden, durch die eine entsprechende Spannkraft auf die Stabenden aufgebracht wird. Auf der den Schrauben gegenüberliegenden Seite befindet sich zwischen der Hülse und den Stabenden ein längliches, mit Querrippen versehenes Einlegeelement, das die mechanische Festigkeit der Verbindung erhöhen soll.

Bei der bekannten Vorrichtung wird das mit Rippen versehene Einlegeelement erst bei der Herstellung der Verbindung von Stabenden eingesetzt, das heißt, beim Verbinden der Stabenden mittels der Hülse muß das Einlegeelement verfügbar sein, wobei dieses Einlegeelement auf den jeweiligen Hülsenquerschnitt bzw. Durchmesser der Stabenden bemessen sein muß. Bei Verwechslungen der Teile, das heißt, wenn diese nicht auf die jeweilige Größe abgestimmt sind, kann es zu Montagefehlern kommen, so daß die erforderliche Festigkeit nicht erreicht wird.

Der vorliegenden Erfindung liegt daher die Aufgabe zugrunde, eine Vorrichtung zum Verbinden von Stabenden der gattungsgemäßen Art zu schaffen, die einfacher zu handhaben ist und bei der an der Baustelle keine zusätzlichen Teile eingesetzt werden müssen.

Diese Aufgabe wird durch eine Vorrichtung zum Verbinden von Stabenden mit den Merkmalen des Anspruchs 1 gelöst.

Durch die versetzte Anordnung der Spannelemente in zwei Reihen ist es möglich, die Spannelemente dichter hintereinander anzuordnen, so daß eine größere Spannkraft aufgebracht und damit die Länge des Rohrstücks geringer sein kann. Bei der Anordnung der Spannelemente in zwei versetzt zueinanderliegenden Reihen ergibt sich auch, daß bezogen auf den Umfang des Stabendes die Kräfte an drei Stellen auf das Stabende einwirken, nämlich bedingt durch die beiden Reihen der Schrauben und als dritte Kraft am durch die Rohrwandung gebildeten Widerlager, das im wesentlichen den Spannelementen diametral gegenüber liegt.

Gemäß einer bevorzugten Weiterbildung ist vorgesehen, daß die den Stäben zugewandten Enden der Spannelemente in unterschiedlichen Richtungen auf die Stäbe wirken. Dabei ist es zweckmäßig, daß die Längsachsen der Gewindebohrungen und Spannelemente einer ersten Reihe in einem Winkel zu den Längsachsen der Gewindebohrungen und Spannelemente der zweiten Reihe angeordnet sind, wobei der Winkel ≤60° beträgt. Als besonders zweckmäßig wird angesehen, daß der Winkel etwa 30° beträgt, da auf diese Weise eine einfache Zugänglichkeit von der selben Seite gegeben ist, wodurch die Montage erleichtert wird.

Gemäß einer alternativen Ausgestaltung verlaufen die Längsachsen der Gewindebohrungen und Spannelemente einer ersten Reihe mindestens annähernd parallel zu den Längsachsen der Gewindebohrungen und Spannelemente der zweiten Reihe, wobei die jeweiligen Längsachsen in einer Ebene seitlich versetzt zum Durchmesser des Rohrstückes liegen. Dabei ist es zweckmäßig, daß eine Längskante der Gewindebohrungen mindestens annähernd auf einer Tangente zu der inneren Mantelfläche des Rohrstückes liegt. Auf diese Weise sind die Spannelemente maximal gegeneinander versetzt.

Um die Einstecktiefe jedes Stabendes festzulegen, ist es zweckmäßig, daß mindestens annähernd in der Mitte der Länge des Rohrstücks ein Querelement angeordnet ist, wobei das Querelement vorzugsweise ein diametral durch das Rohrstück ragender Spannstift ist. Zur weiteren Erhöhung der mechanischen Festigkeit der Verbindung ist es vorteilhaft, daß in jedem der Abschnitte des Rohrstücks, der ein Stabende aufnimmt, mindestens eine Spannschraube vorgesehen ist, die bezogen auf den Umfang des Rohrstücks den Spannmitteln der beiden Reihen im wesentlichen gegenüber liegt.

Gemäß einer vorteilhaften Weiterbildung ist vorgesehen, daß Querstifte nahe der Innenwandung des Rohrstücks vorgesehen sind, so daß das Stabende an dieser Stelle abgestützt wird, während in den benachbarten Bereichen durch die jeweils nächsten Spannelemente eine radiale Verformung erfolgt. Dabei ergibt sich eine erhöhte Festigkeit durch eine Verformung der Stabenden und den dadurch bewirkten erhöhten Formschluß. Bei Vorrichtungen mit Querstiften nahe der Innenwandung des Rohrstücks ist es zweckmäßig, daß die Längsachse eines Spannelementes mindestens annähernd den Querstift schneidet und die Längsachse eines anderen Spannelementes in einem Abstand von dem Querstift liegt, der etwa das Zweifache des Durchmessers der Spannelemente beträgt. Auf diese Weise ist ein ausreichender Abstand gegeben, der eine Verformung des Stabendes in einem Bereich seitlich des Querstiftes ermöglicht. Der Querstift ist vorzugsweise als Spannstift oder Kerbstift ausgeführt und besteht aus einem Material mit einer Festigkeit, die größer ist als diejenige des Bewehrungsstabes.

Ausführungsbeispiele der Erfindung sind nachstehend anhand der Zeichnung näher erläutert. In der Zeichnung zeigt:
- Fig. 1: Eine Vorrichtung zum Verbinden von Stabenden,
- Fig. 2: eine Ansicht in Richtung des Pfeils II in Fig. 1,
- Fig. 3: eine Draufsicht gemäß Pfeil III in Fig. 1,
- Fig. 4: eine Ausführungsvariante zu Fig. 1, jedoch ohne eingeschobene Stabenden,
- Fig. 5: eine Ausführungsvariante zu Fig. 2 mit Spannelementenanordnung gemäß Fig. 4,
- Fig. 6: eine Draufsicht auf die Anordnung gemäß Fig. 4,
- Fig. 7: eine weitere Ausführungsvariante zu Fig. 1 mit weiteren Spannschrauben,
- Fig. 8: eine stirnseitige Ansicht der Verbindungsanordnung der Fig. 7 mit eingespanntem Stabende,
- Fig. 9: eine Ansicht in Richtung des Pfeils IX in Fig. 7,
- Fig. 10: eine Spannschraube als Einzelteil,
- Fig. 11: ein als Spannstift ausgeführtes Querelement in Längserstreckung und stirnseitiger Ansicht,
- Fig. 12: eine weitere Ausführung einer Verbindungsanordnung im Längsschnitt,
- Fig. 13: eine stirnseitige Ansicht der Verbindungsanordnung gemäß Fig. 12.

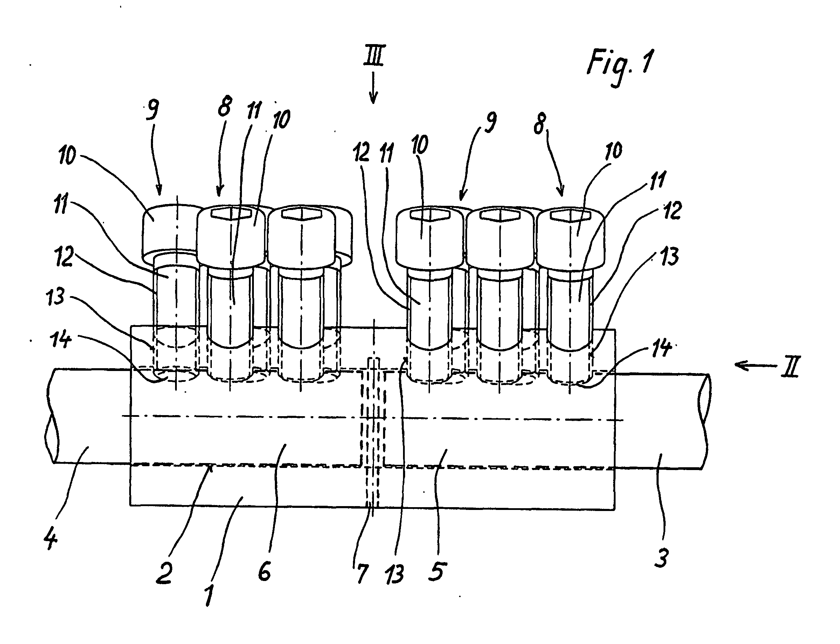

Die Fig. 1 zeigt eine Vorrichtung zum Verbinden von Stabenden, wobei diese Vorrichtung ein Rohrstück 1 umfaßt, in dessen- Längsöffnung 2 Stabenden 5, 6 von Bewehrungsstäben 3, 4 eingesteckt sind. Bezogen auf die Längserstreckung des Rohrstücks 1 ist in der Mitte des Rohrstücks ein Querelement 7 angeordnet, das vorzugsweise als Spannstift ausgeführt ist. Durch diesen Spannstift 7 wird die Einstecktiefe jedes Stabendes 5, 6 definiert. In der Wandung des Rohrstücks 1 sind mehrere Gewindebohrungen 13 vorgesehen, die zur Aufnahme von Spannelementen 8, 9 dienen. Die Spannelemente 8, 9 umfassen einen Schraubenkopf 10 sowie einen Schaft 11 mit einem Außengewinde 12, so daß die Spannelemente in den Gewindebohrungen 13 schraubbar gehalten sind. Mit ihren den Stabenden 5, 6 zugewandten Enden 14 wird durch Einschrauben der Spannelemente 8, 9 die erforderliche Spannkraft auf die Stabenden 5, 6 aufgebracht, um die Stabenden 5, 6 sicher in dem Rohrstück 1 zu halten.

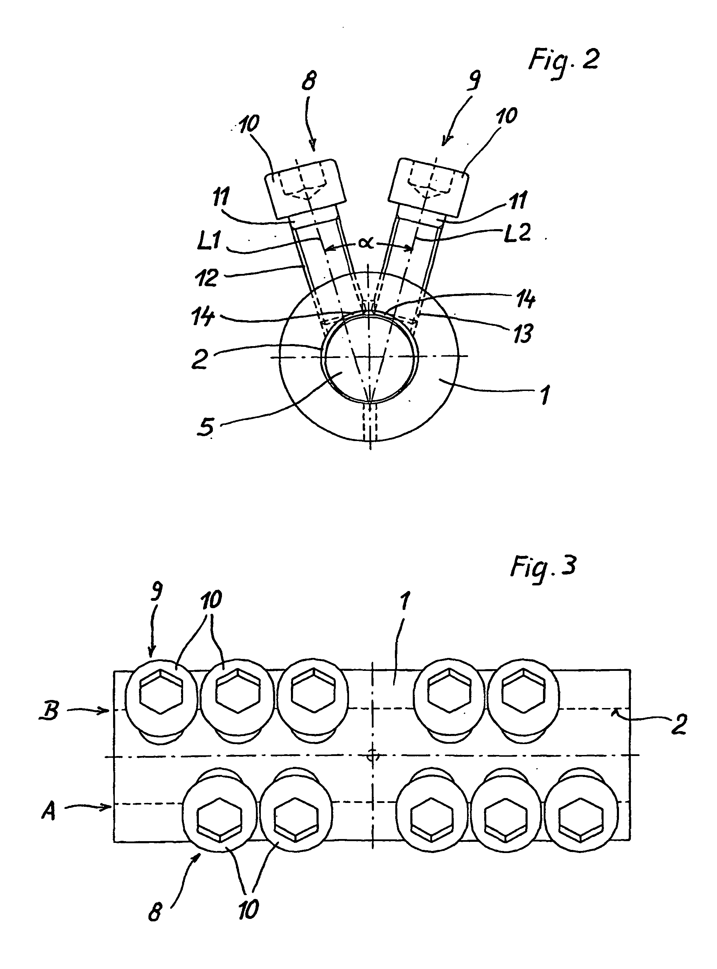

Fig. 2 zeigt eine stirnseitige Ansicht der Vorrichtung, wobei ersichtlich ist, daß die Spannelemente 8, 9 bezüglich ihrer Längsachsen L 1 und L 2 V-förmig zueinander verlaufen. In dem gezeigten Ausführungsbeispiel schließen die Längsachsen L 1 und L 2 einen Winkel α von 30° ein. Weiterhin ist aus Fig. 2 ersichtlich, daß der Bewehrungsstab 3 bzw. das Stabende gegen die untere Wandung der Längsöffnung 2 im Rohrstück 1 gespannt wird, und zwar aufgrund der Spannkraft, die von den Enden 14 der Spannelemente 8 und 9 auf die in Fig. 2 obere Seite des Stabendes 5 aufgebracht wird. Die Bezugszeichen in Fig. 2 stimmen für gleiche Teile mit denjenigen der Fig. 1 überein.

Aus der Draufsicht in Fig. 3 ist erkennbar, daß die Spannelemente 8 in einer Reihe A fluchtend hintereinander angeordnet sind, während die Spannelemente 9 in einer anderen Reihe B fluchtend hintereinander liegen. Wie weiter aus Fig. 3 hervorgeht, sind die Spannelemente 8 gegenüber den Spannelementen 9 versetzt angeordnet, so daß bezogen auf die Längserstreckung der Stabenden 5, 6 die in Fig. 2 gezeigten Enden 14 der Spannelemente 8 und 9 an unterschiedlichen Stellen auf die Stabenden 5, 6 wirken.

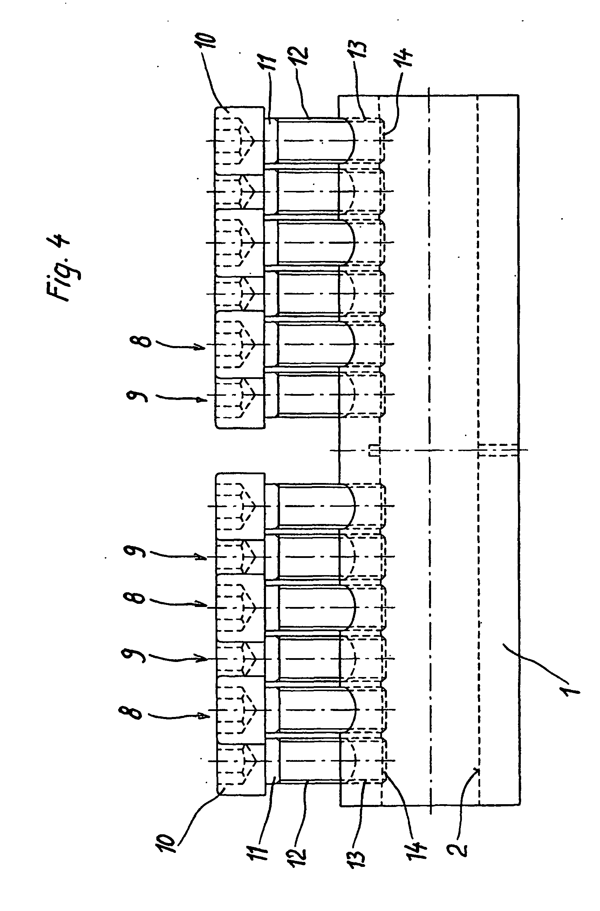

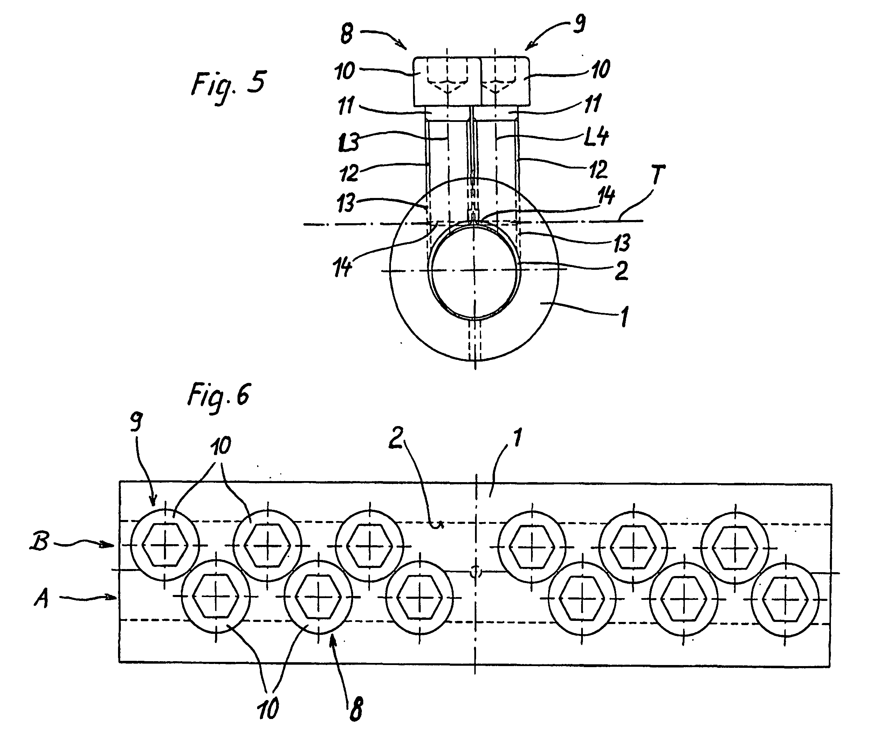

Eine Ausführungsvariante der Vorrichtung zum Verbinden von Stabenden ist in Fig. 4 gezeigt, wobei in dieser Darstellung auf die eingeschobenen Stabenden verzichtet wurde. Aus Fig. 4 in Verbindung mit der Draufsicht in Fig. 6 wird deutlich, daß die Spannelemente 8, 9 ebenfalls in Reihen A und B angeordnet sind, wobei die Spannelemente 8 in der Reihe A zu den Spannelementen 9 in der Reihe B versetzt angeordnet sind, so daß jeweils ein Spannelement 8 zwischen zwei Spannelementen 9 liegt oder auch umgekehrt.

Aus Fig. 5 wird deutlich, daß die Spannelemente 8 und 9 so angeordnet sind, daß deren Längsachsen L 3 und L 4 parallel zueinander verlaufen. Die Längsachsen L 3 und L 4 treffen damit orthogonal auf eine gemeinsame Tangente T der Längsöffnung 2 bzw. des Stabendes 5. Für gleiche Teile stimmen die Bezugszeichen in Fig. 5 mit denjenigen der zuvor beschriebenen Figuren überein. Weiterhin wird aus Fig. 5 deutlich, daß die Gewindebohrungen 13 derart angeordnet sind, daß deren Längskanten tangential zu der Längsöffnung 2 im Rohrstück 1 verlaufen.

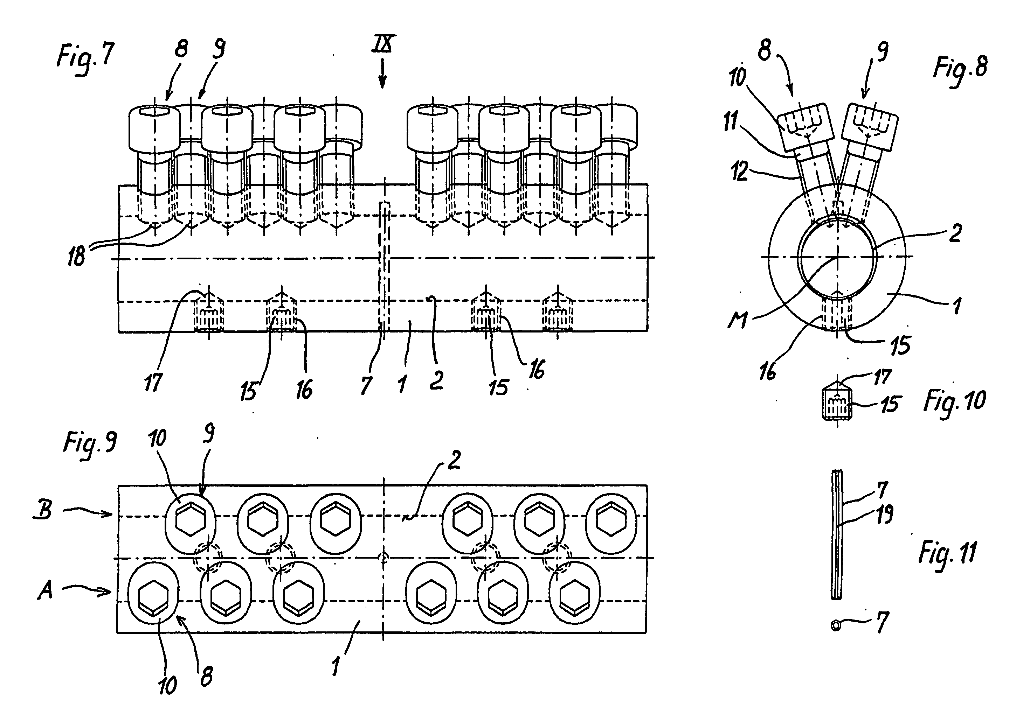

Die Fig. 7 zeigt eine weitere Ausführungsvariante zu Fig. 1, wobei der Unterschied darin besteht, daß die Längsachsen L 1 und L 2 sich nicht an der gegenüberliegenden Innenwandung der Längsöffnung 2 schneiden, sondern im Mittelpunkt M der Längsöffnung. Dadurch sind die Spannelemente 8, 9 näher beieinander angeordnet, wie dies auch aus der Draufsicht in Fig. 9 deutlich wird. Ein weiterer Unterschied des Ausführungsbeispiels in Fig. 7 und 8 besteht in den Spannschrauben 15, die in Gewindebohrungen 16 eingesetzt sind, wobei diese Spannschrauben 15 den Spannelementen 8, 9 gegenüber liegen.

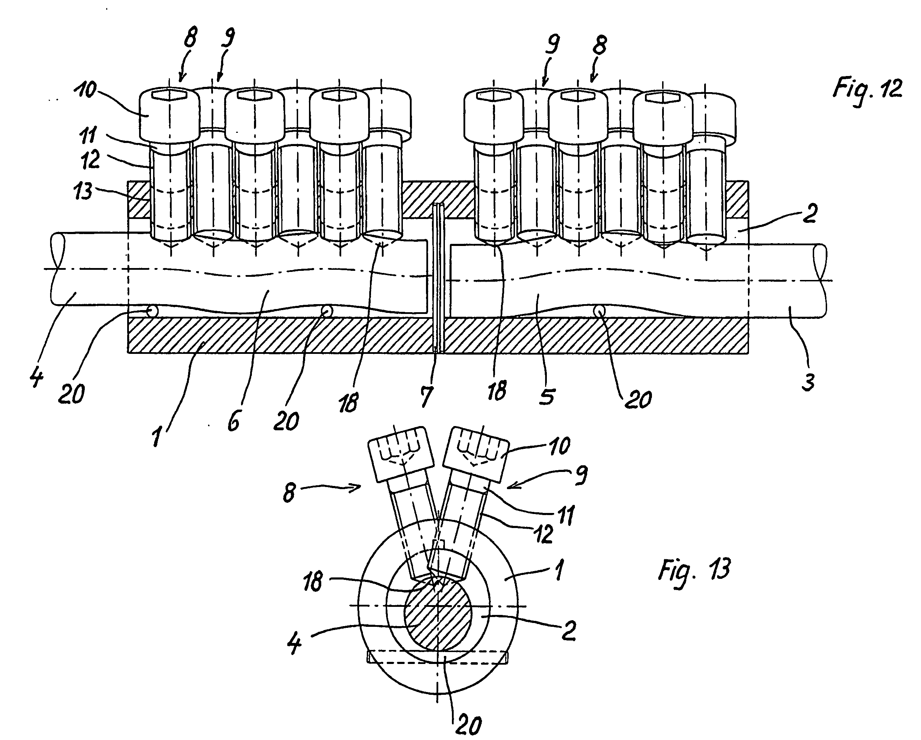

Die Spannelemente 8, 9 haben in dem Ausführungsbeispiel der Fig. 7 und 8 eine Spitze 18 am Ende des Schaftes 11, so daß ein Eindringen beim Spannen der Spannelemente 8, 9 in das Material des Stabendes erleichtert wird. Ebenso besitzen die Spannschrauben 15 eine Spitze 17, wie dies aus Fig. 10 deutlich wird, so daß auch auf dieser Seite ein Eindringen in das Material des Stabendes erfolgt und damit wegen des Formschlusses die mechanische Festigkeit weiter erhöht wird. Die Fig. 11 zeigt das Querelement 7 als Einzelteil, wobei in der gezeigten Ausführungsform das Querelement als Spannstift ausgeführt ist, der einen Längsschlitz 19 aufweist. In Fig. 11 ist der Spannstift sowohl in seiner Längserstreckung als auch in stirnseitiger Ansicht dargestellt.

Eine weitere Ausführungsform einer Verbindungsanordnung für Enden von Bewehrungsstäben ist in Fig. 12 gezeigt. Auch diese Ausführung umfaßt ein Rohrstück 1 mit einer darin gebildeten Längsöffnung 2 zur Aufnahme von Bewehrungsstäben 3, 4 bzw. deren Stabenden 5, 6. Wie aus Fig. 12 und Fig. 13 deutlich wird, sind in dem Rohrstück 1 in unmittelbarer Nähe der Rohrwandung der Längsöffnung 2 mehrere Querstifte 20 vorgesehen, die ebenfalls in vorteilhafter Ausgestaltung als Spannstifte 20 oder Kerbstifte ausgeführt sind.

An der den Spannstiften 20 gegenüberliegenden Seite des Rohrstückes 1 sind die Spannelemente 8, 9 vorgesehen. Zumindest einige der Spannelemente 8, 9 sind derart angeordnet, daß sie auf einen Abschnitt der Stabenden 5, 6 einwirken, der neben den Spannstiften 20 liegt. Zum Einführen der Stabenden 5, 6 sind die Spannelemente 8, 9 in einer Position, in welcher lediglich die Spitze 18 am Schaft 11 in die Längsöffnung 2 ragt, so daß zwischen den Spitzen 18 und den Spannstiften 20 ein ausreichender Abstand zum Einführen der Stabenden 5, 6 vorhanden ist. Durch das Einschrauben der Spannelemente 8, 9 wirken die Spitzen 18 der Spannelemente auf die Stabenden 5, 6 ein, wobei die Spannstifte 20 ein Widerlager bilden, durch das in diesem Bereich die Stabenden abgestützt sind. Durch Einschrauben der Spannelemente 8, 9 erfolgt in den neben den Spannstiften 20 liegenden Bereichen eine Verformung der Stabenden 5, 6, die ebenfalls zur Erhöhung der mechanischen Festigkeit der Verbindungsanordnung führt. Ebenso wie in den zuvor beschriebenen Ausführungsbeispielen ist auch in Fig. 12 zur Festlegung der Einstecktiefe ein Querelement 7 vorgesehen. Die Anordnung der Spannelemente 8, 9 entspricht derjenigen in Fig. 7 und 8.

## Patentansprüche

1. Vorrichtung zum Verbinden von Stabenden (5, 6), insbesondere von Bewehrungsstäben (3, 4) im Betonbau mit einem Rohrstück (1), in das die zu verbindenden Stäbe (3, 4) endseitig eingeführt sind, und mit mehreren jeweils ein Außengewinde (12) aufweisenden Spannelementen (8, 9), die in Gewindebohrungen (13) des Rohrstücks (1) schraubbar gehalten sind, wobei zwei Reihen (A, B) von Spannelementen (8, 9) bezogen auf den Umfang des Rohrstücks 1 auf derselben Seite von diesem vorgesehen sind,
**dadurch gekennzeichnet, daß** die Reihen (A, B) versetzt zueinander angeordnet sind, derart, daß die Spannelemente (8) einer Reihe (A) jeweils zwischen zwei Spannelementen (9) der anderen Reihe (B) liegen.

2. Vorrichtung nach Anspruch 1,
**dadurch gekennzeichnet, daß** die den Stäben (3, 4) zugewandten Enden der Spannelemente (8, 9) in unterschiedlichen Richtungen auf die Stabenden (5, 6) wirken.

3. Vorrichtung zum Verbinden nach Anspruch 1 oder 2,
**dadurch gekennzeichnet, daß** die Längsachsen (L 1, L 2) der Gewindebohrungen (13) und Spannelemente (8) einer ersten Reihe (A) in einem Winkel (α) zu den Längsachsen (L 2) der Gewindebohrungen (13) und Spannelemente (9) der zweiten Reihe (B) angeordnet sind, wobei der Winkel (α) ≤60° beträgt.

4. Vorrichtung nach Anspruch 3,
**dadurch gekennzeichnet, daß** der Winkel (α) etwa 30° beträgt.

5. Vorrichtung nach Anspruch 1 oder 2,
**dadurch gekennzeichnet, daß** die Längsachsen (L 3, L 4) der Gewindebohrungen (13) und Spannelemente (8) einer ersten Reihe (A) mindestens annähernd parallel zu den Längsachsen (L 4) der Gewindebohrungen (13) und Spannelemente (9) der zweiten Reihe (B) verlaufen und die jeweiligen Längsachsen (L 3, L4) in einer Ebene seitlich versetzt zum Durchmesser des Rohrstücks 1 liegen.

6. Vorrichtung nach Anspruch 5,
**dadurch gekennzeichnet, daß** eine Längskante der Gewindebohrungen (13) mindestens annähernd auf einer Tangente zu der inneren Mantelfläche des Rohrstücks (1) liegt.

7. Vorrichtung nach einem der Ansprüche 1 bis 6,
**dadurch gekennzeichnet, daß** mindestens annähernd in der Mitte der Länge des Rohrstücks (1) ein Querelement (7) angeordnet ist, wobei das Querelement vorzugsweise ein diametral durch das Rohrstück (1) ragender Spannstift (7) oder Kerbstift ist.

8. Vorrichtung nach einem der Ansprüche 1 bis 7,
**dadurch gekennzeichnet, daß** in jedem der Abschnitte des Rohrstücks (1), der ein Stabende (5, 6) aufnimmt, mindestens eine Spannschraube (15) vorgesehen ist, die bezogen auf den Umfang des Rohrstücks (1) den Spannmitteln (8, 9) der beiden Reihen (A, B) im wesentlichen gegenüber liegt.

9. Vorrichtung nach einem der Ansprüche 1 bis 8,
**dadurch gekennzeichnet, daß** in dem Rohrstück (1) in jedem Abschnitt, der ein Stabende (5, 6) aufnimmt, wenigstens ein Querstift (20) angeordnet ist, der mindestens annähernd orthogonal zur Längsachse des Rohrstücks 1 verläuft und in unmittelbarer Nähe der inneren Rohrwandung angeordnet ist.

10. Vorrichtung nach Anspruch 9,
**dadurch gekennzeichnet, daß** der Querstift (20) als Kerb- oder Spannstift ausgeführt ist und aus gehärtetem Material besteht.

## Claims

1. A device for connectirig the ends of bars (5, 6), in particular of reinforcing bars (3, 4) in concrete construction, having a pipe section (1) into which are inserted the ends of the bars (3, 4) to be connected and having several clamping elements (8, 9), each with an external thread (12), which can be secured in threaded holes (13) in the pipe section (1) by screwing, two rows (A, B) of clamping elements (8, 9) being provided on the same side of the pipe section (1) in relation to its periphery,
**characterised in that**
the rows (A, B) are positioned offset in relation to one another in such a manner that the clamping elements (8) of one row (A) each lie between two clamping elements (9) of the other row (B).

2. A device in accordance with claim 1,
**characterised in that**
the ends of the clamping elements (8, 9) facing the bars (3, 4) act on the bar ends (5, 6) in different directions.

3. A device in accordance with claim 1 or 2,
**characterised in that**
the longitudinal axes (L1, L2) of the threaded holes (13) and the clamping elements (8) of a first row (A) lie at an angle (α) to the longitudinal axes (L2) of the threaded holes (13) and the clamping elements (9) of the second row (B), the angle (α) being ≤60°.

4. A device in accordance with claim 3,
**characterised in that**
the angle (α) is approximately 30°.

5. A device in accordance with claim 1 or 2,
**characterised in that**
the longitudinal axes (L3, L4) of the threaded holes (13) and the clamping elements (8) of a first row (A) run at least approximately parallel to the longitudinal axes (L4) of the threaded holes (13) and the clamping elements (9) of the second row (B), and the various longitudinal axes (L3, L4) lie in a plane laterally offset in relation to the diameter of the pipe section (1).

6. A device in accordance with claim 5,
**characterised in that**
a longitudinal edge of the threaded holes (13) lies at least approximately on a tangent to the inner wall surface of the pipe section (1).

7. A device in accordance with one of claims 1 to 6,
**characterised in that**
a transverse element (7) is positioned at least approximately in the centre of the length of the pipe section (1), the transverse element preferably being a clamping pin (7) or grooved pin which projects diametrically through the pipe section (1).

8. A device in accordance with one of claims 1 to 7,
**characterised in that**
at least one clamping screw (15) which lies essentially opposite the clamping means (8, 9) in the two rows (A, B) in relation to the periphery of the pipe section (1) is provided in each of the sections of the pipe section (1) which receives a bar end (5, 6).

9. A device in accordance with one of claims 1 to 8,
**characterised in that**
at least one transverse pin (20) which runs at least approximately perpendicular to the longitudinal axis of the pipe section (1) and is positioned in the immediate vicinity of the inner pipe wall is positioned in each section of the pipe section (1) which receives a bar end (5, 6).

10. A device in accordance with claim 9,
**characterised in that**
the transverse pin (20) is designed as a grooved or clamping pin and is made of a hardened material.

## Revendications

1. Dispositif destiné à relier des extrémités de barre (5, 6), notamment des barres d'armature (3, 4) dans un construction en béton comprenant un tronçon de tube (1), dans lequel sont introduites côté extrémité les barres (3, 4) destinées à être reliées, et comprenant plusieurs éléments de serrage (8, 9) comportant respectivement un filet extérieur (12), lesquels éléments sont maintenus de manière à pouvoir être vissés dans les alésages filetés (13) du tronçon de tube (1), deux rangées (A, B) d'éléments de serrage (8, 9) étant prévues par rapport à la périphérie du tronçon de tube 1 sur le même côté que celui-ci,
**caractérisé en ce que** les rangées (A, B) sont disposées en étant décalées l'une par rapport à l'autre, de telle sorte que les éléments de serrage (8) d'une rangée (A) se situent respectivement entre deux éléments de serrage (9) de l'autre rangée (B).

2. Dispositif selon la revendication 1,
**caractérisé en ce que** les extrémités des éléments de serrage (8, 9) tournées vers les barres (3, 4) agissent dans différentes directions sur les extrémités de barre (5, 6).

3. Dispositif d'assemblage selon la revendication 1 ou 2,
**caractérisé en ce que** les axes longitudinaux (L1, L2) des alésages filetés (13) et des éléments de serrage (8) d'une première rangée (A) sont disposés selon un angle (α) par rapport aux axes longitudinaux (L2) des alésages filetés (13) et des éléments de serrage (9) de la seconde rangée (B), l'angle (α) s'élevant à ≤60°.

4. Dispositif selon la revendication 3,
**caractérisé en ce que** l'angle (α) s'élève approximativement à 30°.

5. Dispositif selon la revendication 1 ou 2,
**caractérisé en ce que** les axes longitudinaux (L3, L4) des alésages filetés (13) et des éléments de serrage (8) d'une première rangée (A) s'étendent au moins approximativement parallèlement aux axes longitudinaux (L4) des alésages filetés (13) et des éléments de serrage (9) de la seconde rangée (B) et les axes longitudinaux (L3, L4) respectifs se situent dans un plan en étant latéralement décalés par rapport au diamètre du tronçon de tube 1.

6. Dispositif selon la revendication 5,
**caractérisé en ce qu'**une arête longitudinale des alésages filetés (13) se situe au moins approximativement sur une tangente par rapport à la surface de revêtement intérieure du tronçon de tube (1).

7. Dispositif selon l'une quelconque des revendications 1 à 6,
**caractérisé en ce qu'**un élément transversal (7) est disposé au moins approximativement au centre de la longueur du tronçon de tube (1), l'élément transversal étant de préférence une goupille de serrage (7) ou une goupille cannelée dépassant de préférence diamétralement du tronçon de tube (1).

8. Dispositif selon l'une quelconque des revendications 1 à 7,
**caractérisé en ce que** dans chacune des sections du tronçon de tube (1) recevant une extrémité de barre (5, 6), il est prévu au moins une vis de serrage (15) qui se situe par rapport à la périphérie du tronçon de tube (1) sensiblement à l'opposé des moyens de serrage (8, 9) des deux rangées (A, B).

9. Dispositif selon l'une quelconque des revendications 1 à 8,
**caractérisé en ce qu'**au moins une goupille transversale (20) est disposée dans le tronçon de tube (1) dans chaque section recevant une extrémité de barre (5, 6), laquelle goupille s'étend au moins approximativement orthogonalement à l'axe longitudinal du tronçon de tube 1 et est disposée à proximité immédiate de la paroi tubulaire interne.

10. Dispositif selon la revendication 9,
**caractérisé en ce que** la goupille transversale (20) est conçue comme une goupille cannelée ou de serrage et est constituée d'un matériau trempé.
